# EUROPÄISCHE PATENTSCHRIFT

(11) **EP 2 716 593 B1**
(45) Veröffentlichungstag und Bekanntmachung des Hinweises auf die Patenterteilung: **04.03.2015**
(21) Anmeldenummer: 13184245.2
(22) Anmeldetag: 13.09.2013
(51) Int. Cl.: B67C 7/00, B08B 9/42, B65G 47/90

(54) **Klammergreifer für Behälter**
Clamp gripper for container
Agrafe de préhension pour récipients

(30) Priorität: 05.10.2012 DE 102012218204
(43) Veröffentlichungstag der Anmeldung: 09.04.2014
(73) Patentinhaber: Krones AG, 93073 Neutraubling (DE)
(72) Erfinder: Landler, Bruno, 93073 Neutraubling (DE); Schönfelder, Markus, 93073 Neutraubling (DE)
(74) Vertreter: Grünecker, Kinkeldey, Stockmair & Schwanhäusser

(56) Entgegenhaltungen:
- WO-A1-2009/118579
- DE-A1- 19 513 221
- DE-A1-102005 014 838
- DE-A1-102006 053 846
- DE-A1-102010 005 673

## Beschreibung

Die Erfindung betrifft einen Klammergreifer für Behälter, insbesondere Flaschen, nach dem Oberbegriff des Anspruchs 1 und wie aus der DE 195 13 221 bekannt.

Klammergreifer für Behältertransportsysteme können bekanntermaßen Kraftspeicher umfassen, wie beispielsweise Elastomerfedern, Spiralfedern, Schraubendruckfedern oder Permanentmagnete, siehe beispielsweise die DE 10 2005 041 929 A1, um eine Greifkraft zwischen zwei Klammerschenkeln zu erzeugen. Die Klammergreifer lassen sich dann entweder ungesteuert durch Hineindrücken der jeweils zu haltenden Behälter öffnen, oder gesteuert mittels an den Klammerschenkeln vorgesehenen Steuernocken oder dergleichen. Wie beispielsweise aus der DE 10 2005 041 929 A1 deutlich wird, umfassen derartige Klammergreifer vergleichsweise komplexe Gelenke, Verzahnungen sowie mehrschenklige Klammerkonfigurationen. Klammergreifer aus einer Vielzahl einzelner Komponenten sind jedoch aufwändig in der Herstellung. Außerdem sind hygienische Anforderungen, beispielsweise in Füllstationen, nur mit vergleichsweise aufwändiger Reinigung und/oder Entkeimung einzuhalten.

Die DE 10 2005 002 715 A1 beschreibt gelenklose Greifer mit elastisch auseinander schwenkbaren Greiferschenkeln. Die Greifkraft muss hierbei durch die elastisch verformten Greiferschenkel aufgebracht werden. Aufgrund dieser Verformung eignen sich die Greifer in der Regel nur für einen bestimmten gegriffenen Durchmesser. Außerdem eignen sich die flexiblen Greiferschenkel nur bedingt für die geforderten Radiallasten zum sicheren Greifen von Behältern und/oder für Vertikallasten, die beispielsweise beim Befüllen der Behälter entstehen.

Es besteht daher der Bedarf für strukturell einfache und leicht zu reinigende Klammergreifer, die mit den beim Handhaben und Befüllen von Behältern üblichen Radiallasten und Vertikallasten belastbar sind. Wünschenswert sind ferner Klammergreifer, die für unterschiedliche gegriffene Durchmesser geeignet sind.

Die gestellte Aufgabe wird mit einem Klammergreifer nach Anspruch 1 gelöst.

Demnach umfasst dieser zwei Klammerschenkel und einen die Klammerschenkel verbindenden Steg. Erfindungsgemäß bestehen die Klammerschenkel und der Steg aus einem Faserverbundwerkstoff, dessen Faserdichte im Steg geringer ist als in den Klammerschenkeln. Der Faserverbundwerkstoff umfasst wenigstens eine Werkstoffmatrix, beispielsweise ein Kunststoffmaterial, in die versteifende Fasern, beispielsweise sogenannte Langfasern, eingebettet sind. Der Faserverbundwerkstoff kann ferner Additive enthalten, beispielsweise zur Erhöhung der Abriebfestigkeit oder dergleichen. Da die Faserdichte im Steg geringer ist als in den Klammerschenkeln, lässt sich ein Bereich mit vergleichsweise geringer Steifigkeit im Steg bereitstellen. Die Faserdichte kann beispielsweise als der volumetrische Anteil der Fasern in einem bestimmten Bereich des Klammergreifers verstanden werden, oder als Querschnittsanteil der Fasern.

Die Elastizität des Stegs ermöglicht ein gelenkfreies Öffnen und Schließen der Klammerschenkel. Der Steg kann insbesondere derart ausgebildet sein, dass die Klammerschenkel beim Öffnen und Schließen des Klammergreifers im Wesentlichen starr sind und sich entsprechend einer Schwenkbewegung um eine gemeinsame Schwenkachse oder zwei separate, zueinender parallele Schwenkachsen bewegen.

Vorzugsweise umfasst der Faserverbundwerkstoff ein elastisches Grundmaterial, in das demgegenüber steifere Fasern eingebettet sind, wobei sich insbesondere die Elastizitätsmoduln des Grundmaterials und der Fasern wenigstens um den Faktor 10 voneinander unterscheiden. Der Begriff "elastisch" ist hierbei so zu verstehen, dass eine funktionelle elastische Verformbarkeit des Grundmaterials bei den für das Öffnen und Schließen auftretenden Kräften gegeben ist. Die Fasern verstärken das Grundmaterial. Je nach Faserdichte und Belastung des jeweiligen Greiferabschnitts verformen sich dabei auch die eingebetteten Fasern elastisch.

Das Grundmaterial des Faserverbundwerkstoffs kann beispielsweise eine Epoxidharz-Matrix umfassen. Die Fasern können beispielsweise CFK-Langfasern sein. Mit Hilfe eines elastischen Grundmaterials lässt sich eine hohe Standfestigkeit des Klammergreifers bei wiederholtem Öffnen und Schließen auch ohne Gelenkverbindung zwischen den Klammerschenkeln realisieren. Ferner lassen sich Hinterschneidungen und Gelenkspalte vermeiden. Dies erleichtert die Reinigung und Entkeimung des Klammergreifers.

Vorzugsweise umfasst der Steg einen faserfreien Bereich. Dadurch lässt sich die Elastizität des Grundmaterials optimal im Sinne eines Gelenkersatzes ausnutzen. Folglich können die Klammerschenkel besonders starr ausgebildet sein.

Vorzugsweise sind die Klammerschenkel und der Steg aus einem Stück gefertigt. Dies minimiert die Anzahl nötiger Hinterschneidungen, Verbindungsstellen und damit die Anzahl vergleichsweise schwierig zu reinigender Spalte. Prinzipiell geeignet wären jedoch auch stoffschlüssige Verbindungen, wie beispielsweise Kunststoffschweißnähte oder dergleichen.

Vorzugsweise lassen sich die Klammerschenkel unter elastischer Verformung, insbesondere Dehnung, des Steges federnd auseinanderdrücken. Mittels der elastischen Verformung des Stegs lässt sich somit auf einfache Weise eine Rückstellkraft zum Halten von Behältern, insbesondere Flaschen, erzeugen. Insbesondere sind zusätzliche Energiespeicher mittels vorgespannter Federn oder Permanentmagnete entbehrlich.

Vorzugsweise verlaufen die Fasern in den Klammerschenkeln im Wesentlichen in Längsrichtung der Klammerschenkel. Diese im Wesentlichen axiale Ausrichtung der Fasern ermöglicht eine Versteifung der Klammerschenkel sowohl in Greifrichtung, nachfolgend auch als radiale Richtung bezeichnet, als auch in einer senkrecht dazu stehenden Ebene. Letzteres dient bei der üblichen horizontalen Ausrichtung der Klammergreifer beim Greifen von Flaschen oder dergleichen zum Aufnehmen von Vertikallasten. Somit lassen sich sowohl geeignete Greifkräfte realisieren als auch eine geforderte Widerstandsfähigkeit gegenüber Vertikallasten. Derartige Vertikallasten können beispielsweise im ordnungsgemäßen Betrieb durch das Andrücken eines Füllventils an gegriffene Behältermündungen entstehen. Außerdem ist es wünschenswert, sicherheitshalber auch höhere Vertikallasten bei einer Fehlbelastung abstützen zu können.

Vorzugsweise sind die Klammerschenkel zum Greifen in einer im Wesentlichen horizontalen Greifebene ausgebildet, insbesondere zum Greifen eines Halsbereiches der Behälter. Der Klammergreifer eignet sich dann besonders für die Handhabung der Behälter im sogenannten Neckhandling, beispielsweise beim Füllen der Behälter. Die Behälter sind beispielsweise Flaschen, insbesondere solche aus Kunststoff.

Vorzugsweise sind an den Klammerschenkeln je zwei in Greifrichtung überstehende Anlagenocken ausgebildet, derart, dass sich die Behälter mittels eines umfänglich verteilten Vierpunktkontakts an den Anlagenocken halten lassen. Dies ermöglicht eine besonders exakte Justierung der Behälterhauptachse bezüglich einer zwischen den Kammerschenkeln ausgebildeten Soll-Halteposition der Behälter. Unter dem Vierpunktkontakt ist zu verstehen, dass die beiden Klammerschenkel insgesamt an vier entlang des gegriffenen Umfanges verteilten Punkten an dem Behälter in im Wesentlichen axialer Richtung angreifen. Dies erfolgt insbesondere derart, dass jeder Anlagenocken in einem separaten Quadranten des gegriffenen Behälterquerschnitts angreift. Dies ermöglicht ein besonders stabiles Halten der Behälter.

Vorzugsweise stehen die Anlagenocken in Greifrichtung dann so weit über die Innenseite der Klammerschenkel über, dass sich mit den Anlagenocken unterschiedliche Behälter, deren gegriffene Durchmesser sich um wenigstens 15 %, insbesondere um wenigstens 25 %, unterscheiden, mittels des umfänglich verteilten Vierpunktkontakts halten lassen. Mit Hilfe des Vierpunktkontaktes lassen sich somit Klammergreifer für unterschiedliche gegriffene Durchmesser auf einfache Weise realisieren. Insbesondere kann trotz unterschiedlicher gegriffener Durchmesser eine stabile Halterung der Behälter in dem Klammergreifer gewährleistet werden.

Vorzugsweise sind die Klammerschenkel im Bereich zwischen den Anlagenocken jeweils im Wesentlichen starr ausgebildet. Dadurch lassen sich unterschiedliche gegriffene Durchmesser besonders exakt bezüglich einer vorgegebenen Soll-Position innerhalb der Klammergreifer halten. Anders gesagt wird eine Verformung der Klammerschenkel beim Öffnen und Greifen weitgehend vermieden. Es ist dann in jedem Fall ein ausreichender Abstand zwischen der Behälteraußenwand und den Innenseiten der Klammerschenkel im Bereich zwischen den Anlagenocken gewährleistet.

Vorzugsweise sind die Anlagenocken umfänglich derart entlang der Innenseite der Klammerschenkel verteilt, dass die gegriffenen Querschnitte der unterschiedlichen Behälter bezüglich einer gemeinsamen Referenzposition innerhalb der Greifklammer zentriert sind. Die gemeinsame Referenzposition ist beispielsweise eine Soll-Position der Behälterhauptachse. Die Referenzposition ist beispielsweise bezüglich eines Befestigungspunktes des Klammergreifers an einem Transportmittel oder dergleichen definiert. Dadurch lassen sich Behälter mit unterschiedlichen gegriffenen Durchmessern ohne Änderung der Greiferposition, also bei identischer Maschinenposition, zentriert unter einem Füllventil oder dergleichen positionieren. Der Klammergreifer lässt sich dann besonders flexibel und zuverlässig für unterschiedliche Behälter einsetzen.

Vorzugsweise sind die Anlagenocken in Greifrichtung konvex gekrümmt. Dies vereinfacht das zentrierte Halten unterschiedlicher gegriffener Durchmesser. Eine exakte Vierpunktlagerung ist entlang der gesamten konvex gekrümmten Anlagefläche der Anlagenocken gewährleistet.

Vorzugsweise ist die Greifklammer derart mit den Fasern verstärkt, dass sie einer an den Klammerschenkeln angreifenden Vertikallast von wenigstens 120 N widersteht. Dies ermöglicht einen Dauerbetrieb des Klammergreifers in Füllmaschinen.

Vorzugsweise ist der Faserverbundwerkstoff gegen H₂O₂ beständig, insbesondere basierend auf einem derartig beständigen Kunstharz. Dies ermöglicht die Verwendung des Klammergreifers in hygienisch besonders anspruchsvollen Anlagenbereichen, beispielsweise in Abfüllstationen. Insbesondere im Zusammenwirken mit einer einstückigen Ausführung der Klammerschenkel und des Stegs lassen sich besonders einfach und gründlich zu reinigende Klammergreifer bereitstellen.

Vorzugsweise ist der Steg derart elastisch ausgebildet, dass bei einem Spreizen der Greifklammer um 10 mm bei einer Spreizkraft von wenigstens 750 N die Materialspannung im Steg 100 MPa nicht übersteigt. Dies ermöglicht ein sicheres Greifen von Flaschenhälsen oder dergleichen bei einer gleichzeitig hohen Standfestigkeit im Dauerbetrieb.

Bevorzugte Ausführungsformen sind in der Zeichnung dargestellt. Es zeigen:
- Fig. 1: eine Schrägansicht einer ersten Ausführungsform des erfindungsgemäßen Klammergreifers mit schematisch angedeuteten Verstärkungsfasern; und
- Fig. 2: eine zweite Ausführungsform des erfindungsgemäßen Klammergreifers beim Greifen unterschiedlicher Behälterdurchmesser.

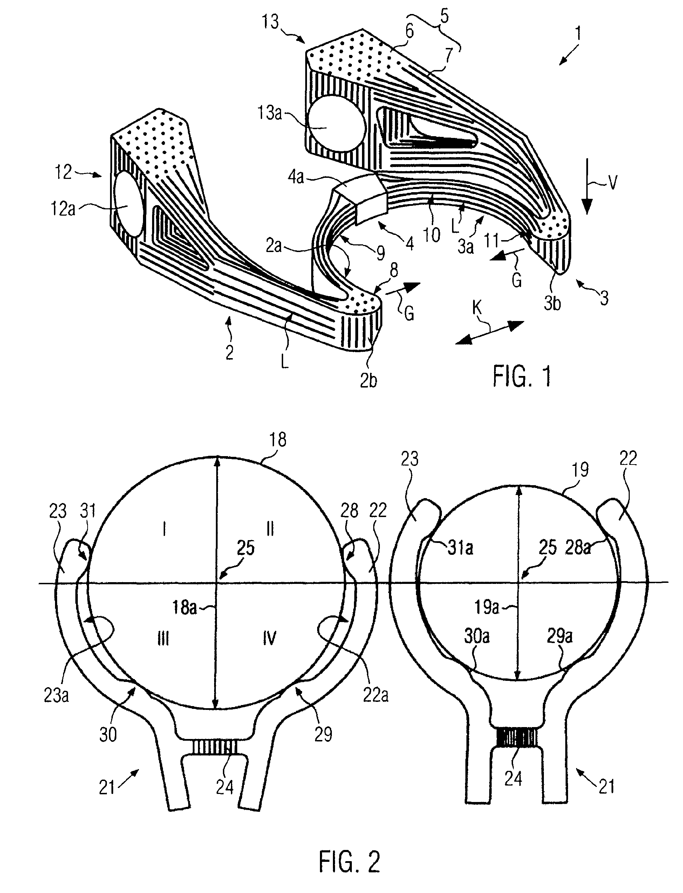

Wie die Fig. 1 erkennen lässt, umfasst eine erste bevorzugte Ausführungsform des erfindungsgemäßen Klammergreifers 1 zwei Klammerschenkel 2, 3, die mittig durch einen Steg 4 miteinander verbunden sind. Die Klammerschenkel 2, 3 und der Steg 4 bestehen jeweils aus einem Faserverbundwerkstoff 5, umfassend ein Grundmaterial 6, in das zu dessen Verstärkung versteifende Fasern 7 eingebettet sind. Der Verlauf der Fasern 7 ist schematisch durch Linien und Punkte angedeutet, wobei Punkte den jeweiligen Faserquerschnitt repräsentieren.

Auf der einem zu greifenden Behälter benachbarten Innenseite der Klammerschenkel 2, 3 sind die Positionen von vier Anlagenocken 8 bis 11 angedeutet. Diese dienen als Anlagepunkte für einen Halsbereich oder Seitenwandbereich des zu greifenden Behälters, beispielsweise einer Getränkeflasche. Die Anlagenocken 8 bis 11, deren Funktion insbesondere aus der Fig. 2 deutlich wird, sind vorzugsweise als integrale Bestandteile der jeweiligen Klammerschenkel 2, 3 ausgebildet. Die Klammerschenkel 2, 3 umfassen ferner hintere Befestigungsabschnitte 12, 13, um den Klammergreifer an einem nicht dargestellten Transportmittel, Behältertisch oder dergleichen zu lagern. In den Befestigungsbereichen 12, 13 können zu diesem Zweck beispielsweise Montagebohrungen 12a, 13a vorgesehen sein.

Der Steg 4 umfasst vorzugsweise einen faserfreien Bereich 4a. Ebenso kann der Steg 4 wenigstens einen Bereich umfassen, in dem die Dichte der Fasern 7 zumindest geringer ist als in den Klammerschenkeln 2, 3. Insbesondere ist die Dichte der Fasern 7 im Steg 4 geringer als in dem jeweils zwischen den Anlagenocken 8, 9 bzw. 10, 11 liegenden mittleren Abschnitten 2a, 3a der Klammerschenkel 2, 3. Folglich ist im Bereich des Stegs 4 ein vergleichsweise elastischer Bereich ausgebildet, wogegen die Klammerschenkel 2, 3, und insbesondere die zwischen den jeweiligen Anlagenocken 8, 9 und 10, 11 liegenden mittleren Bereiche 2a, 3a, vergleichsweise starr ausgebildet sind. Darunter ist zu verstehen, dass beim Einwirken einer die Klammerschenkel 2, 3 auseinanderdrückenden Kraft K im Wesentlichen nur der Steg 4 elastisch verformt, insbesondere gedehnt wird. Folglich verformen sich beim Öffnen des Klammergreifers 1 insbesondere die mittleren Bereiche 2a, 3a der Klammerschenkel 2, 3 nicht oder nur unwesentlich.

Wie die Fig. 1 ferner erkennen lässt, verlaufen die Fasern 7 in den Klammerschenkeln 2, 3 im Wesentlichen in Längsrichtung L der Klammerschenkel 2, 3, also bezüglich des Querschnitts der Klammerschenkel im Wesentlichen axial. Dies gilt insbesondere für die mittleren Bereiche 2a, 3a der Klammerschenkel 2, 3. Dadurch lässt zum Einen eine ausreichende Steifigkeit der Klammerschenkel 2, 3 entgegen der Greifrichtung G, also beim Öffnen und Greifen gewährleisten. Zum Anderen wird eine ausreichende Steifigkeit gegenüber senkrecht dazu einwirkenden Lasten erzielt, in der Fig. 1 schematisch als Vertikallast V angedeutet. Derartige Vertikallasten V können beispielsweise von einem Füllventil (nicht dargestellt) verursacht werden, das gegen einen in dem Klammergreifer 1 gehaltenen Behälter gedrückt wird.

Fig. 1 lässt ferner erkennen, dass die Fasern 7 beispielsweise in einem vorderen Endabschnitt 2b, 3b der Klammerschenkel 2, 3 und/oder in den Befestigungsbereichen 12, 13 im Wesentlichen vertikal ausgerichtet sein können. Demgegenüber sind die Fasern 7 insbesondere im mittleren Bereich 2a, 3a zwischen den Anlagenocken 8, 9 und 10, 11 im Wesentlichen horizontal ausgerichtet. Dadurch lässt sich die Verteilung der Materialspannung in den Klammerschenkeln 2, 3 für sogenannte Radiallasten, also beim Öffnen und Greifen, und bezüglich Vertikallasten V an den Klammerschenkeln 2 ,3 optimieren.

Das Greifen von Behältern 18, 19, insbesondere solchen mit unterschiedlichen zu greifenden Durchmessern 18a, 19a ist in der Fig. 2 für eine zweite Ausführungsform des erfindungsgemäßen Klammergreifers 21 schematisch dargestellt. Dieser umfasst ebenso Klammerschenkel 22, 23, die mittels eines elastischen Stegs 24 miteinander verbunden sind. Die Elastizität des Stegs 24 und die demgegenüber starre Ausbildung der Klammerschenkel 22, 23 erfolgt in analoger Weise zur ersten Ausführungsform 1 durch eine unterschiedlich dichte Verteilung der Fasern 7 im Grundmaterial 6. Die Faserverteilung ist der Übersichtlichkeit halber in der Fig. 2 nicht dargestellt. Allerdings ist die Elastizität des Stegs 24, der im Beispiel der Fig. 2 durch Öffnen des Klammergreifers gedehnt wird, anhand quer verlaufender Hilfslinien angedeutet.

Die Fig. 2 verdeutlicht ferner, dass die Behälter 18, 19 bezüglich einer gemeinsamen Referenzposition 25 in dem Klammergreifer 21 zentriert gehalten werden. Dies wird im Wesentlichen dadurch ermöglicht, dass die Klammerschenkel 22, 23 in mittleren Bereichen 22a, 23a zwischen den Anlagenocken 28, 29 und 30, 31 im Wesentlichen starr ausgebildet sind, so dass sie sich beim Öffnen der Klammerschenkel 22, 23 nicht verformen. Außerdem ist in den mittleren Bereichen 22a, 23a, jeweils zwischen den Klammerschenkeln 22, 23 und der Seitenwand der Behälter 18, 19 ein Luftspalt ausgebildet, so dass die Behälter 18, 19 nur im Bereich der Anlagenocken 28 bis 31 gehalten werden. Es wird somit in jedem Fall eine Vierpunktanlage längs des Behälterumfangs gewährleistet. Der Abstand zwischen den Anlagenocken 28, 29 des einen Klammerschenkels 22 und der Abstand zwischen den Anlagenocken 30, 31 des anderen Klammerschenkels 23 kann hierbei an den Bereich zu greifender Behälterdurchmesser 18a, 19a angepasst werden. Die Anlagenocken 28 bis 31 sind außerdem so um den Umfang des zu greifenden Querschnitts verteilt, dass jeder Anlagenocken 28 bis 31 den Behälter in einem anderen Teilquadranten I bis IV des Behälterquerschnitts hält.

Vorzugsweise ist an den Anlagenocken 28 bis 31 jeweils eine in Richtung der zu greifenden Behälter 18, 19 weisende konvex gekrümmte Anlagefläche 28a bis 31 a ausgebildet. Dies erleichtert eine im Wesentlichen tangentiale Vierpunktanlage an den Anlagenocken 28 bis 31 unabhängig von dem jeweils zu haltenden Behälterdurchmesser 18a, 19a.

Beispielsweise lassen sich mit den Ausführungsformen 1, 21 Behälterdurchmesser greifen, die sich um wenigstens 15 % voneinander unterscheiden, insbesondere um wenigstens 25 %. Dadurch lässt sich gewährleisten, dass die üblichen Durchmesser im Halsbereich von Flaschen mit maximal zwei unterschiedlich großen Klammergreifern 1, 21 abgedeckt werden können. Denkbar sind beispielsweise ein erster Klammergreifer für den Durchmesserbereich von 24 bis 38 mm und ein zweiter Klammergreifer für den Durchmesserbereich von 38 bis 44 mm. Insbesondere an Füllmaschinen ermöglicht der Klammergreifer das zentrierte Halten von Behältermündungen unter einem Füllventil und eine in vertikaler Richtung stabile Positionierung der Behältermündungen bei den üblichen Anpressdrücken von Füllventilen von beispielsweise 120 N.

Aufgrund der gelenkfreien Verbindung der Klammerschenkel 2, 3, 22, 23 mittels der flexiblen Stege 4, 24 lässt sich der Klammergreifer 1, 21 besonders gründlich und einfach reinigen. Zudem kann das Grundmaterial 6 beständig gegen übliche Reinigungsmedien und Desinfektionsmittel sein.

Die Fasern 7, beispielsweise an sich bekannte CFK-Langfasern oder dergleichen, können in bekannter Weise in dem Grundmaterial 6, beispielsweise einer Epoxidharz-Matrix, eingebettet werden. Hierbei lassen sich je nach Faserdichte und Faserorientierung im Bereich der Klammerschenkel 2, 3, 22, 23 Vertikallasten bis zu 800 N für vereinzelt auftretende Missbrauchslasten realisieren. Demgegenüber sind die beim Füllen von Behältern auftretenden Vertikallasten von 120 N als normale Gebrauchslasten im Dauerbetrieb anzusehen.

Für das Grundmaterial 6 des Faserverbundwerkstoffs 5 kommen neben den erwähnten Epoxidmaterialien auch thermoplastische und/oder duroplastische Kunststoffe in Betracht. Die Herstellung des Faserverbundwerkstoffes 5 kann beispielsweise in Pressverfahren, Schäumverfahren, Extrusionsverfahren, Spritzgießverfahren und/oder Resin-Transfer-Moulding-Verfahren erfolgen.

Der Klammergreifer 1, 21 lässt sich sowohl als passiver Greifer, also ungesteuert, einsetzen als auch als aktiver Greifer, also gesteuert. Bei Verwendung als passiver Greifer könnten die Klammerschenkel 2, 3, 22, 23 jeweils fest auf einem Behältertisch montiert sein. Im Beispiel der Fig. 1 wären beispielsweise die Befestigungsbereiche 12, 13 durch Verschrauben fest an einer Montageplatte oder dergleichen zu befestigen.

Bei aktiv gesteuerter Betriebsweise wäre wenigstens einer der Befestigungsbereiche 12, 13 um eine vertikale Achse schwenkbar zu lagern. Eine aktive Ansteuerung zum Öffnen der Klammergreifer 1, 21 wäre dann beispielsweise mit Hilfe einer Kurvensteuerung möglich.

In beiden Fällen bliebe der für die Hygiene und die auftretenden radialen und vertikalen Lasten entscheidende Greifbereich an der Vierpunktanlage gelenkfrei und mit leicht zu reinigenden Oberflächen. Besonders vorteilhaft ist hierbei eine einstückige Ausführung der Klammerschenkel 2, 3, 22, 23 und der elastischen Stege 4, 24. Dies ermöglicht besonders leicht zu reinigende Oberflächen und eine hohe Widerstandsfähigkeit gegenüber vertikalen und radialen Lasten.

## Patentansprüche

1. Klammergreifer (1, 21) für Behälter (18, 19), insbesondere Flaschen, umfassend zwei Klammerschenkel (2, 3, 22, 23) und einen die Klammerschenkel verbindenden Steg (4, 24), wobei die Klammerschenkel und der Steg aus einem Faserverbundwerkstoff (5) bestehen, **dadurch gekennzeichnet, dass** die Faserdichte im Steg geringer ist als in den Klammerschenkeln.

2. Klammergreifer nach Anspruch 1, wobei der Faserverbundwerkstoff (5) ein elastisches Grundmaterial (6) umfasst, in das demgegenüber steifere Fasern (7) eingebettet sind, wobei sich insbesondere die Elastizitätsmodule des Grundmaterials und der Fasern wenigstens um den Faktor 10 unterscheiden.

3. Klammergreifer nach Anspruch 1 oder 2, wobei der Steg (4) einen faserfreien Bereich (4a) umfasst.

4. Klammergreifer nach wenigstens einem der vorigen Ansprüche, wobei die Klammerschenkel (2, 3, 22, 23) und der Steg (4, 24) aus einem Stück gefertigt sind.

5. Klammergreifer nach wenigstens einem der vorigen Ansprüche, wobei sich die Klammerschenkel (2, 3, 22, 23) unter elastischer Verformung, insbesondere Dehnung, des Stegs (4, 24) federnd auseinander drücken lassen.

6. Klammergreifer nach wenigstens einem der vorigen Ansprüche, wobei die Fasern (7) in den Klammerschenkeln (2, 3) im Wesentlichen in Längsrichtung (L) der Klammerschenkel verlaufen.

7. Klammergreifer nach wenigstens einem der vorigen Ansprüche, wobei die Klammerschenkel (2, 3, 22, 23) zum Greifen in einer im Wesentlichen horizontalen Greifebene ausgebildet sind, insbesondere zum Greifen eines Halsbereichs der Behälter (18, 19).

8. Klammergreifer nach wenigstens einem der vorigen Ansprüche, wobei an den Klammerschenkeln (2, 3, 22, 23) je zwei in Greifrichtung (G) vorstehende Anlagenocken (8 - 11, 28 - 31) ausgebildet sind, derart dass sich die Behälter (18, 19) mittels eines umfänglich verteilten Vierpunktkontakts halten lassen.

9. Klammergreifer nach Anspruch 8, wobei die Anlagenocken (8 - 11, 28 - 31) in Greifrichtung (G) so weit über die Innenseite der Klammerschenkel (2, 3, 22, 23) überstehen, dass sich mit den Anlagenocken unterschiedliche Behälter (18, 19), deren gegriffener Durchmesser (18a, 19a) sich um wenigstens 15%, insbesondere um wenigstens 25%, unterscheiden, mittels umfänglichen Vierpunktkontakts halten lassen.

10. Klammergreifer nach Anspruch 8 oder 9, wobei die Klammerschenkel (2, 3, 22, 23) im Bereich (2a, 3a, 22a, 23a) zwischen den Anlagenocken (8 - 11, 28 - 31) jeweils Wesentlichen starr ausgebildet sind.

11. Klammergreifer nach wenigstens einem der Ansprüche 8 bis 10, wobei die Anlagenocken (8 - 11, 28 - 31) umfänglich derart entlang der Innenseite der Klammerschenkel (2, 3, 22, 23) verteilt sind, dass die gegriffenen Querschnitte unterschiedlicher Behälter (18, 19) bezüglich einer gemeinsamen Referenzposition (25) innerhalb der Greifklammer (1, 21) zentriert sind.

12. Klammergreifer nach wenigstens einem der Anspruch 8 bis 11, wobei die Anlagenocken (8 - 11, 28 - 31) in Greifrichtung (G) konvex gekrümmt sind.

13. Klammergreifer nach wenigstens einem der vorigen Ansprüche, wobei die Greifklammer (1, 21) derart mit den Fasern (7) verstärkt ist, dass sie an den Klammerschenkeln (2, 3, 22, 23) einwirkenden Vertikallasten (V) von wenigstens 120 N widersteht.

14. Klammergreifer nach wenigstens einem der vorigen Ansprüche, wobei der Faserverbundwerkstoff (5) gegen H₂O₂ beständig ist.

15. Klammergreifer nach wenigstens einem der vorigen Ansprüche, wobei der Steg (4, 24) derart elastisch ausgebildet ist, dass bei einem Spreizen der Greifklammer (1, 21) um 10 mm bei einer Spreizkraft von wenigstens 750 N die Materialspannung im Steg (4, 24) 100 MPa nicht übersteigt.

## Claims

1. Clamp gripper (1, 21) for containers (18, 19), in particular bottles, comprising two clamp arms (2, 3, 22, 23) and a web (4, 24) connecting the clamp arms, the clamp arms and web being made from a composite fibre material (5), **characterised in that** the fibre density in the web is lower than in the clamp arms.

2. Clamp gripper as claimed in claim 1, wherein the composite fibre material (5) comprises an elastic base material (6) in which fibres (7) stiffer than it are embedded, and in particular the moduli of elasticity of the base material and the fibres differ by at least a factor of 10.

3. Clamp gripper as claimed in claim 1 or 2, wherein the web (4) comprises a fibre-free region (4a).

4. Clamp gripper as claimed in at least one of the preceding claims, wherein the clamp arms (2, 3, 22, 23) and the web (4, 24) are made from one piece.

5. Clamp gripper as claimed in at least one of the preceding claims, wherein the clamp arms (2, 3, 22, 23) can be pushed resiliently apart from one another by elastically deforming, in particular stretching, the web (4, 24).

6. Clamp gripper as claimed in at least one of the preceding claims, wherein the fibres (7) in the clamp arms (2, 3) extend essentially in the longitudinal direction (L) of the clamp arms.

7. Clamp gripper as claimed in at least one of the preceding claims, wherein the clamp arms (2, 3, 22, 23) are designed to grip in an essentially horizontal gripping plane, in particular to grip a neck region of the containers (18, 19).

8. Clamp gripper as claimed in at least one of the preceding claims, wherein two contact cams (8 - 11, 28 - 31) projecting in the gripping direction (G) are provided respectively on the clamp arms (2, 3, 22, 23) enabling the containers (18, 19) to be held by means of a circumferentially distributed four-point contact.

9. Clamp gripper as claimed in claim 8, wherein the contact cams (8 - 11, 28 - 31) extend so far beyond the internal face of the clamp arms (2, 3, 22, 23) in the gripping direction (G) that different containers (18, 19), the gripped diameter (18a, 19a) of which differs by at least 15%, in particular by at least 25%, can be held by the contact cams by means of a circumferentially distributed four-point contact.

10. Clamp gripper as claimed in claim 8 or 9, wherein the clamp arms (2, 3, 22, 23) are each of an essentially rigid design in the region (2a, 3a, 22a, 23a) between the contact cams (8 - 11, 28 - 31).

11. Clamp gripper as claimed in at least one of claims 8 to 10, wherein the contact cams (8 - 11, 28 - 31) are distributed circumferentially along the internal face of the clamp arms (2, 3, 22, 23) in such a way that the gripped cross-sections of different containers (18, 19) are centred relative to a common reference position (25) within the gripping clamps (1, 21).

12. Clamp gripper as claimed in at least one of claims 8 to 11, wherein the contact cams (8 - 11, 28 - 31) are convexly curved in the gripping direction (G).

13. Clamp gripper as claimed in at least one of the preceding claims, wherein the gripping clamp (1, 21) is reinforced by the fibres (7) in such a way that it is capable of withstanding vertical loads (V) of at least 120 N acting on the clamp arms (2, 3, 22, 23).

14. Clamp gripper as claimed in at least one of the preceding claims, wherein the composite fibre material (5) is resistant to H₂O₂.

15. Clamp gripper as claimed in at least one of the preceding claims, wherein the web (4, 24) is elastically designed so that the material tension in the web (4, 24) does not exceed 100 Mpa when the gripping clamps (1, 21) are prised open by 10 mm with a prising force of at least 750 N.

## Revendications

1. Préhenseur à pince (1, 21) pour récipients ou contenants (18, 19), notamment des bouteilles, comprenant deux branches de pince (2, 3, 22, 23) et une traverse de liaison (4, 24) reliant les branches de pince, les branches de pinces et la traverse de liaison étant réalisées en un matériau composite renforcé de fibres (5), **caractérisé en ce que** la densité de fibres dans la traverse de liaison est moindre que dans les branches de pince.

2. Préhenseur à pince selon la revendication 1, dans lequel le matériau composite renforcé de fibres (5) comprend un matériau de base (6) élastique, à l'intérieur duquel sont noyées des fibres (7) plus rigides par rapport à celui-ci, les modules d'élasticité du matériau de base et des fibres étant notamment différents d'au moins un facteur 10.

3. Préhenseur à pince selon la revendication 1 ou la revendication 2, dans lequel la traverse de liaison (4) présente une zone (4a) exempte de fibres.

4. Préhenseur à pince selon l'une au moins des revendications précédentes, dans lequel les branches de pince (2, 3, 22, 23) et la traverse de liaison (4, 24) sont fabriquées d'un seul tenant.

5. Préhenseur à pince selon l'une au moins des revendications précédentes, dans lequel les branches de pince (2, 3, 22, 23) peuvent être écartées de manière élastique, par déformation élastique, notamment allongement, de la traverse de liaison (4, 24).

6. Préhenseur à pince selon l'une au moins des revendications précédentes, dans lequel les fibres (7) s'étendent, à l'intérieur des branches de pince (2, 3), sensiblement dans la direction longitudinale (L) des branches de pince.

7. Préhenseur à pince selon l'une au moins des revendications précédentes, dans lequel les branches de pince (2, 3, 22, 23) sont conçues pour assurer la préhension dans un plan de préhension sensiblement horizontal, notamment pour assurer la préhension d'une zone de col des contenants (18, 19).

8. Préhenseur à pince selon l'une au moins des revendications précédentes, dans lequel sur les branches de pince (2, 3, 22, 23) sont respectivement formées deux protubérances d'appui (8-11, 28-31) en saillie dans la direction de préhension (G), de façon à ce que les contenants (18, 19) soient tenus moyennant un contact à quatre points répartis sur la périphérie.

9. Préhenseur à pince selon la revendication 8, dans lequel les protubérances d'appui (8-11, 28-31) font saillie du côté intérieur des branches de pince (2, 3, 22, 23) dans la direction de préhension (G) d'une valeur telle, que les protubérances d'appui puissent maintenir, moyennant un contact périphérique à quatre points, des contenants (18, 19) différents, dont les diamètres saisis (18a, 18b) sont différents d'au moins 15%, notamment d'au moins 25%.

10. Préhenseur à pince selon la revendication 8 ou la revendication 9, dans lequel les branches de pince (2, 3, 22, 23) sont réalisées sensiblement rigides, respectivement dans la zone (2a, 3a, 22a, 23a) entre les protubérances d'appui (8-11, 28-31).

11. Préhenseur à pince selon l'une au moins des revendications 8 à 10, dans lequel les protubérances d'appui (8-11, 28-31) sont réparties de manière périphérique le long du côté intérieur des branches de pince (2, 3, 22, 23) de façon à ce que les sections saisies de différents contenants (18, 19) soient, par rapport à une position de référence (25) commune, centrées à l'intérieur de la pince de préhension (1, 21).

12. Préhenseur à pince selon l'une au moins des revendications 8 à 11, dans lequel les protubérances d'appui (8-11, 28-31) sont courbées de manière convexe dans la direction de préhension (G).

13. Préhenseur à pince selon l'une au moins des revendications précédentes, dans lequel la pince de préhension (1, 21) est renforcée par les fibres (7) de manière à résister à des charges verticales (V) agissant au niveau des branches de pince (2, 3, 22, 23), d'au moins 120 N.

14. Préhenseur à pince selon l'une au moins des revendications précédentes, dans lequel le matériau composite renforcé de fibres (5) résiste et est stable à H₂O₂.

15. Préhenseur à pince selon l'une au moins des revendications précédentes, dans lequel la traverse de liaison (4, 24) est d'une configuration élastique telle, que lors d'une expansion de la pince de préhension (1, 21) de 10 mm, pour une force d'expansion d'au moins 750 N, la contrainte du matériau dans la traverse de liaison (4, 24) n'excède pas 100 MPa.
